(19) Europäisches Patentamt / European Patent Office / Office européen des brevets

(11) **EP 4 428 699 A1**

(12) **EUROPEAN PATENT APPLICATION**

(43) Date of publication:
**11.09.2024 Bulletin 2024/37**

(21) Application number: **24161955.0**

(22) Date of filing: **07.03.2024**

(51) International Patent Classification (IPC):
**G06F 13/16** (2006.01)     **G06F 3/06** (2006.01)

(52) Cooperative Patent Classification (CPC):
**G06F 13/1631; G06F 3/0659; G06F 13/1642**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.03.2023 US 202363451138 P**
**25.08.2023 US 202318238312**

(71) Applicant: **Samsung Electronics Co., Ltd.**
**Suwon-si, Gyeonggi-do 16677 (KR)**

(72) Inventors:
• **LEE, Hobin**
**San Jose, CA, 95134 (US)**
• **PITCHUMANI, Rekha**
**San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **MEMORY DEVICE AND METHOD FOR SCHEDULING BLOCK REQUEST**

(57)     There is provided a memory controller 309 including an interface 301 and a processor. The processor fetches a memory request C1 in one of a plurality of queues Q1-Q4 storing a plurality of memory requests C1-C4 from a host 310, compares a destination address of the memory request C1 with a first stored destination address, among one or more stored destination addresses in a storage, associates the memory request C1 with the first stored destination address in the storage based on a match between the destination address of the memory request C1 and the first stored destination address in the storage, and processes one or more entries in the storage in response to the memory request C1.

**FIG. 4**

**Description**

BACKGROUND

**1. Field**

Systems, apparatuses and methods consistent with example embodiments of the disclosure relate to memory access, and in particular, to a memory device and a method for scheduling a memory request from a block device.

**2. Description of Related Art**

Modern enterprise and data-center workloads, including the latest sensational Large Language Models (LLMs), are all hitting the memory wall (i.e., both the bandwidth wall and capacity wall). In order to address these problems, new memory-centric computing architectures such as Compute Express Link (CXL) standard are being considered. The CXL standard has been introduced to provide a high speed connection between a host device and other devices. The CXL protocol builds on the Peripheral Component Interconnect Express (PCIe or PCI-E) standard, which is a serial expansion bus standard for connecting a host device to one or more block devices and/or peripheral devices. The host device may include a central processing unit (CPU) executing various applications that require a lot of memory resources. The block devices may include memory devices (e.g., a hard disk devices (HDDs), solid state drives (SSDs), and the like, and the peripheral devices may include, but is not limited to, other processors (e.g., graphic processing units (GPUs), neural processing units (NPUs) and the like), accelerators, smart Network Interface Controllers (NICs).

Information disclosed in this Background section has already been known to the inventors before achieving the embodiments of the present application or is technical information acquired in the process of achieving the embodiments described herein. Therefore, it may contain information that does not form prior art that is already known to the public.

SUMMARY

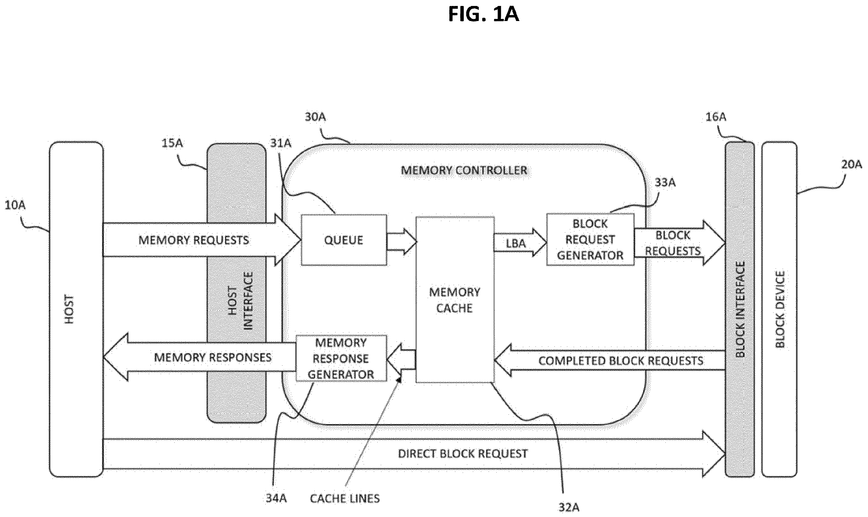

Generally, the host device, referred to as "host" hereinafter, accesses data stored in a block device through a memory controller. FIG. 1A is a diagram illustrating operations between a host, a memory controller and a block device (e.g., SSD) according to a related art. As illustrated in FIG. 1A, a memory controller 30A receives memory requests from a host 10A through a host interface 15A and places the memory requests in a queue 31A. A memory cache 32A in the memory controller 30A may receive the queued memory requests in the queue 31A and output a logical block address (LBA) corresponding to a received memory request in the queue to a block request generator 33A. Here, the memory cache 32A may be a dynamic random access memory (DRAM). The block request generator 33A may send a block request to a block device 20A through a block interface 16A to fetch a block of data from the block device 20A and store the fetched block of data in the memory cache 32A. Subsequently, the memory cache 32A outputs the cached data to a memory response generator 34A through cache lines and the memory response generator 34A sends the fetched data to the host 10A through the host interface 15A.

However, operating the memory cache 32A in the memory controller 30A is complex, complicated and incurs various overheads in terms of efficient management of cache entries, and requires additional algorithms, such as, an eviction algorithm, a pre-fetch algorithm, etc. Moreover, DRAM and DRAM-like components increase cost. As such, the cost of the cache memory and cache data affects the overall performance and cost of a computer system.

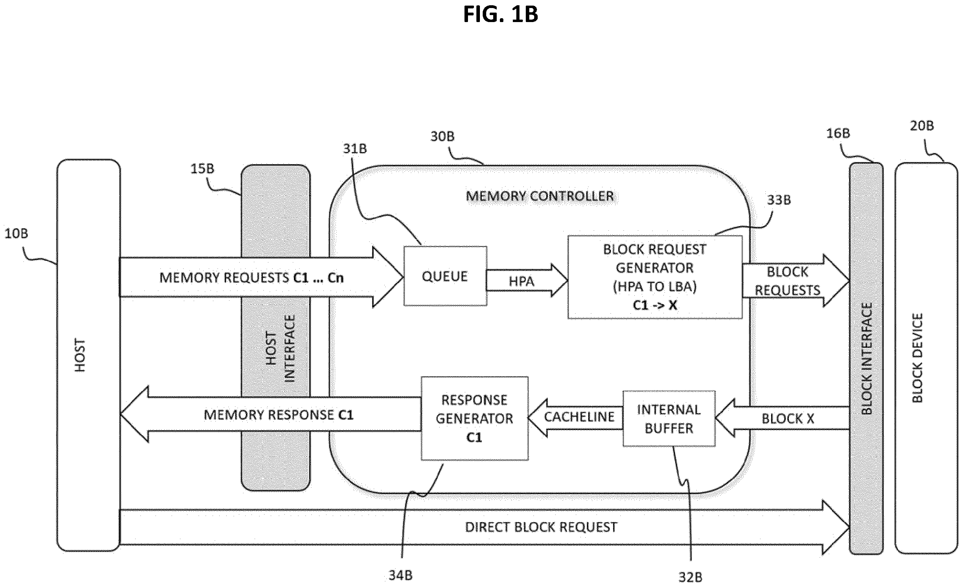

In order to address the drawbacks of the memory cache 32A and the memory controller 30A using the memory cache 32A illustrated in FIG. 1A, there is provided a host-memory system and a method for serving sequential memory access in the host-memory system as illustrated in FIG. 1B. According to the comparative system illustrated in FIG. 1B, the host-memory system may include a host 10B, a memory controller 30B, and a block device 20B. The comparative system illustrated in FIG. 1B may be a system performing a memory access based on CXL standard. The memory controller 30B receives memory requests (C1, ..., Cn) from a host 10B through a host interface 15B and places the requests in a queue 31B. The memory requests (C1, ..., Cn) may be CXL requests. A block request generator 33B in the memory controller 30B receives the queued memory requests one by one. For example, the block request generator 33B receives a host physical address (HPA) corresponding to the memory request C1. The block request generator 33B converts the HPA to a logical block address (LBA) and sends a block request based on the LBA to a block device 20B through the block interface 16B to fetch a block of data from the block device 20B. The block of data fetched from the block device 20B is stored in an internal buffer 32B. Subsequently, a response generator 34B receives the block of data from the internal buffer 32B and generates a memory response C1 for memory request C1 using the block of data. One of the benefits of the comparative system illustrated in FIG. 1B is that it operates without an internal cache. However, , the data stored in the internal buffer 32B will be discarded, and a new block of data corresponding to the next memory request C2 will be stored in the internal buffer 32B. Therefore, in the memory controller 30B of the comparative system, one flash page (e.g., block X) is read corresponding to one memory request C1 (i.e., CXL read request), among a plurality of memory requests, and stored in an internal buffer, and subsequently output to the host as a memory response C1. Upon completion of the one memory request, the flash page is discarded, thus leading to inefficiencies in the comparative system.

Various example embodiments of the disclosure, provide a system, a memory device and method for efficiently serving sequential memory access to a block device.

According to an aspect of the disclosure, a host-memory system and a method for operating the same may use page-aligned memory accesses, track subsequent block requests with traffic class, and/or bind memory requests according to a block address. Page-aligned memory accesses may be implemented in various applications and tiered memory architecture. The device block size is also aligned with a memory page size, which optimally results in zero input/output (IO) amplification. For example, 64 sequential memory access can be performed in a single flash page assuming 64B host cache line, 4KB host memory page, and 4KB device block. Also, random memory accesses may be served at comparable performance because it is common that cache hit ratio of random accesses is low. Accordingly, instead of using an internal cache, subsequent block requests may be tracked using traffic class and binding memory requests according to block address.

For example, in a case in which the memory requests are CXL requests, the binding of the CXL requests may be efficient due to a performance gap. For example, there may be a difference between the bandwidth of CXL 2.0 (PCIe5x4), which is 16GB/s, and the bandwidth of a memory device, which can perform a 4KB random read at 10GB/s and a random write at 2GB/s. The gap between CXL 2.0 and the memory device shows that there is a significant difference in performance, with CXL 2.0 being faster. Accordingly, the systems and methods according to various example embodiments, utilize the performance gap to efficiently serve sequential memory access without using an internal cache.

According to an aspect of the disclosure, there is provided a memory controller including: an interface configured to receive a memory request from a host; and a processor configured to: fetch the memory request in a queue storing the memory request, compare a destination address of the memory request with a first stored destination address, among one or more stored destination addresses in a storage, associate the memory request with the first stored destination address in the storage based on a match between the destination address of the memory request and the first stored destination address in the storage, and process one or more entries in the storage in response to the memory request.

According to another aspect of the disclosure, there is provided a memory controller including: an interface configured to receive a memory request from a host; and a processor configured to: receive the memory request from the interface, compare a destination address of the memory request with one or more stored destination addresses in a storage, process the memory request based on a first stored destination address, among the one or more stored destination addresses based on the destination address of the memory request matching the first stored destination address, and add the destination address of the memory request as a new entry in the storage based on the destination address of the memory request missing the one or more stored destination addresses.

According to another aspect of the disclosure, there is provided a memory controller including: a first interface configured to communicate with a storage device; and a processor configured to: obtain first information from a storage including one or more information, each of the one or more information including one of a destination address, a memory operation and one or more memory requests associated with each other, determine a type of the memory operation, and process the first information based on the type of the memory operation.

BRIEF DESCRIPTION OF DRAWINGS

Example embodiments of the disclosure will be more clearly understood from the following detailed description taken in conjunction with the accompanying drawings in which:

FIG. 1A illustrates a memory controller in a system including a host and a memory according to a related art;

FIG. 1B illustrates a memory controller in a system including a host and a memory according to a comparative example;

FIG. 2 is a block diagram of a host storage system, according to embodiments;

FIG. 3 is a diagram illustrating operations of a memory controller according an embodiment,

FIG. 4 illustrates a detailed configuration of a memory controller in a system including a host and a memory according to an embodiment,

FIGS. 5 and 6 illustrate a request binding table according to one or more embodiments,

FIG. 7 is a block diagram of a computer system an embodiment,

FIG. 8 illustrates a flowchart illustrating fetch operations of a memory controller in a system according to an embodiment,

FIG. 9 illustrates a flowchart illustrating fetch operations of a memory controller in a system according to another embodiment,

FIG. 10 illustrates a flowchart illustrating block I/O generation operations of a memory controller in a system according to an embodiment,

FIG. 11 illustrates a flowchart illustrating block I/O generation operations of a memory controller in a system according to another embodiment,

FIG. 12 illustrates a flowchart illustrating request completion operations of a memory controller in a system according to an embodiment, and

FIG. 13 illustrates a flowchart illustrating request completion operations of a memory controller in a system according to another embodiment.

## DETAILED DESCRIPTION

The embodiments of the disclosure described herein are embodiments, and thus, the disclosure is not limited thereto, and may be realized in various other forms. Each of the embodiments provided in the following description is not excluded from being associated with one or more features of another example or another embodiment also provided herein or not provided herein but consistent with the disclosure. For example, even if matters described in a specific example or embodiment are not described in a different example or embodiment thereto, the matters may be understood as being related to or combined with the different example or embodiment, unless otherwise mentioned in descriptions thereof. In addition, it should be understood that all descriptions of principles, aspects, examples, and embodiments of the disclosure are intended to encompass structural and functional equivalents thereof. In addition, these equivalents should be understood as including not only currently well-known equivalents but also equivalents to be developed in the future, that is, all devices invented to perform the same functions regardless of the structures thereof.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

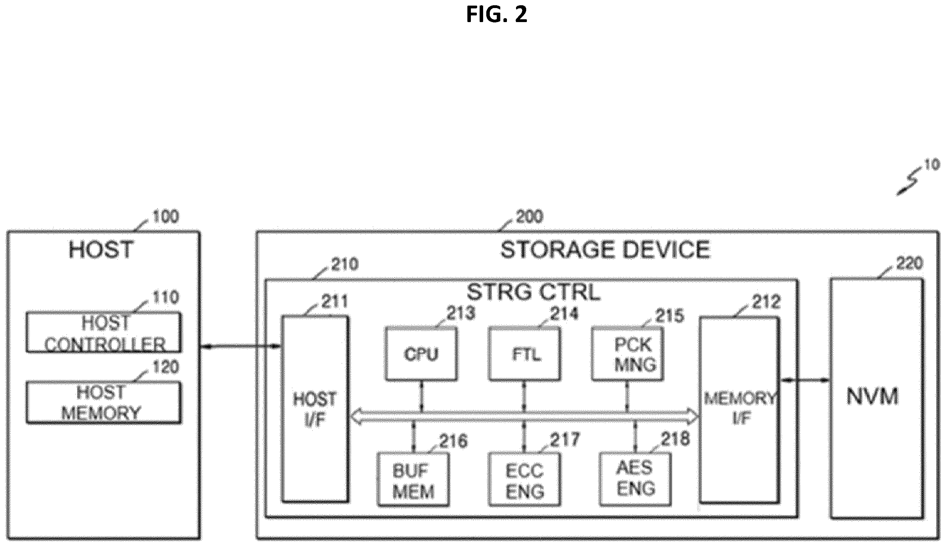

FIG. 2 is a block diagram of a host storage system 10 according to an embodiment.

The host storage system 10 may include a host 100 and a storage device 200. Further, the storage device 200 may include a memory controller 210 and a non-volatile memory (NVM) 220, also referred to as a block device. According to an embodiment, the host 100 may include a host controller 110 and a host memory 120. The host memory 120 may serve as a buffer memory configured to temporarily store data to be transmitted to the storage device 200 or data received from the storage device 200.

The storage device 200 may include storage media configured to store data in response to requests from the host 100. As an example, the storage device 200 may include at least one of an SSD, an embedded memory, and a removable external memory. However, the disclosure is not limited thereto, and as such, the storage device 200 may include other types of memory device. For example, the storage device 200 may include a static random access memory (SRAM) device, a dynamic RAM (DRAM) device, a flash memory device, a phase-change RAM (PRAM) device, a resistive RAM (RRAM) device, etc. In examples in which the storage device 200 is an SSD, the storage device 200 may be a device that conforms to an NVM express (NVMe) standard. When the storage device 200 is an embedded memory or an external memory, the storage device 200 may be a device that conforms to a universal storage standard (UFS) or an embedded multi-media card (eMMC) standard. Each of the host 100 and the storage device 200 may generate, transmit and receive a packet according to an adopted standard protocol.

In examples in which the NVM 220 of the storage device 200 includes a flash memory, the flash memory may include a two-dimensional (2D) NAND memory array or a three-dimensional (3D) or vertical NAND (VNAND) memory array. As another example, the storage device 200 may include various other kinds of NVM. For example, the storage device 200 may include a magnetic random access memory (MRAM), a spin-transfer torque MRAM, a conductive bridging random access memory (CBRAM), a ferroelectric random access memory (FRAM), a parameter random access memory (PRAM), a resistive random access memory (RRAM), and various other types of memory.

According to an embodiment, the host controller 110 and the host memory 120 may be implemented as separate semiconductor chips. Alternatively, in some embodiments, the host controller 110 and the host memory 120 may be integrated in a single semiconductor chip. As an example, the host controller 110 may be any one of a plurality of modules included in an application processor (AP). The AP may be implemented as a System on Chip (SoC). Further, the host memory 120 may be an embedded memory included in the AP or an NVM or memory module located outside the AP.

The host controller 110 may control an operation of storing data (e.g., write data) of a buffer region of the host memory 120 in the NVM 220 or an operation of storing data (e.g., read data) of the NVM 220 in the buffer region of the host memory 120.

The memory controller 210 may include a host interface (I/F) 211, a memory interface (I/F) 212, and a CPU 213. However, the disclosure is not limited to a CPU, and as such, according to another embodiment, the memory controller 210 may include an application-specific integrated circuit (ASIC), an arithmetic and logic unit (ALU), a floating point unit (FPU), a field programmable gate array (FPGA), a central processing unit (CPU) and/or application processor (AP), etc. Further, the memory controller 210 may include a flash translation layer (FTL) 214, a packet manager (PCK MNG) 215, a buffer memory (BUF MEM) 216, an error correction code (ECC) engine (ECC ENG) 217, and an advanced encryption standard (AES) engine (AES ENG) 218. The memory controller 210 may further include a working memory in which the FTL 214 is loaded. The CPU 213 may control the FTL 214 to perform data write and read operations on the NVM 220.

The host interface 211 may transmit and receive packets to and from the host 100. A packet transmitted from the host 100 to the host interface 211 may include a command or data to be written to the NVM 220. A packet transmitted from the host interface 211 to the host 100 may include a response to the command or data read from the NVM 220. The memory interface 212 may transmit data to be written to the NVM 220 or receive data read from the NVM 220. The memory interface 212 may comply with a standard protocol, such as Toggle or open NAND flash interface (ONFI).

The FTL 214 may perform various functions, such as an address mapping operation, a wear-leveling operation, and a garbage collection operation. The address mapping operation may include an operation of converting a logical address received from the host 100 into a physical address used to actually store data in the NVM 220. The wear-leveling operation may include a technique for preventing excessive deterioration of a specific block by allowing blocks of the NVM 220 to be uniformly used. As an example, the wear-leveling operation may be implemented using a firmware technique that balances erase counts of physical blocks. The garbage collection operation may include a technique for ensuring usable capacity in the NVM 220 by erasing an existing block after copying valid data of the existing block to a new block.

The packet manager 215 may generate a packet to be send to a host 100. The packet may be generated according to a protocol compatible with the host 100 or compatible with an interface of the host 100. The packet manager 215 may also parse various types of information from a packet received from the host 100. In addition, the buffer memory 216 may temporarily store data to be written to the NVM 220 or data to be read from the NVM 220. Although the buffer memory 216 may be a component included in the memory controller 210, the buffer memory 216 may be outside the memory controller 210.

The ECC engine 217 may perform error detection and correction operations on read data read from the NVM 220. More specifically, the ECC engine 217 may generate parity bits for write data to be written to the NVM 220, and the generated parity bits may be stored in the NVM 220 together with write data. During the reading of data from the NVM 220, the ECC engine 217 may correct an error in the read data by using the parity bits read from the NVM 220 along with the read data, and output error-corrected read data.

The AES engine 218 may perform at least one of an encryption operation and a decryption operation on data input to the memory controller 210 by using a symmetric-key algorithm. However, the disclosure is not limited to AES, and as such, according to another embodiment, other types of encryption may be used.

Although FIG. 2 illustrates various components of the host storage system 10 according to an embodiment, the disclosure is not limited thereto. As such, according to another embodiment, some of the components may be omitted and/or other components may be added. For example, according to another embodiment, the memory controller 210 may not include an encryption engine.

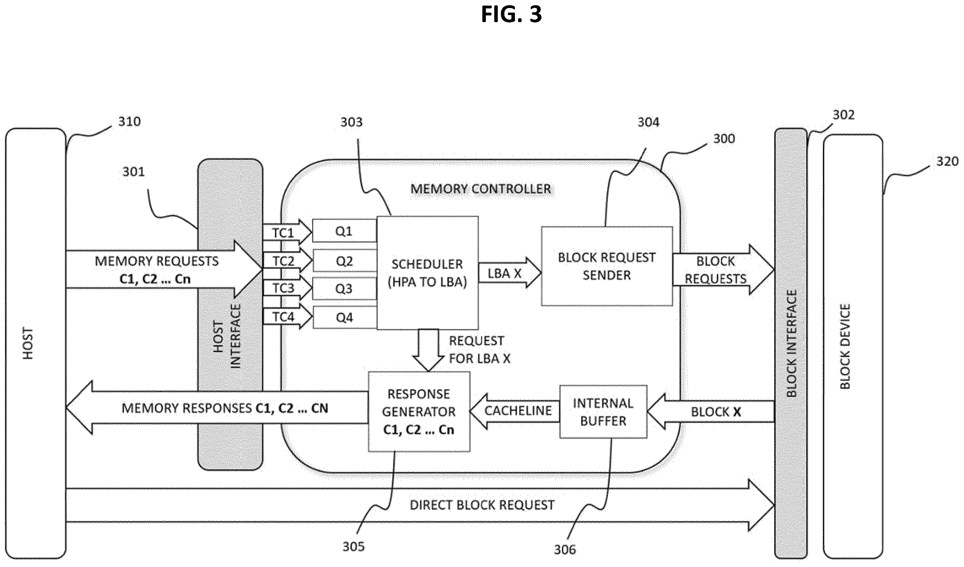

FIG. 3 is a diagram illustrating operations of a memory controller 300 according an embodiment. The memory controller 300 may be similar to memory controller 210 illustrated in FIG. 2, and as such, duplicate details of components and functions may be omitted.

The memory controller 300 may include a host interface 301 for communicating with a host 310, a block interface 302 for communicating with a block device 320, a scheduler 303, a block request sender 304, and a response generator 305. According to an embodiment, the scheduler 303, the block request sender 304, and the response generator 305 may be implemented by hardware, software or a combination of hardware and software. For example, the scheduler 303, the block request sender 304, the response generator 305 and/or other components of the memory controller 300 may be implemented by the CPU 213 illustrated in FIG. 2. However, the disclosure is not limited thereto, and as such, according to another embodiment, the scheduler 303, the block request sender 304, and the response generator 305 may be implemented in a different manner. For example, in case a hardware configuration, these components may be implemented by one or more electronic circuits, and in case of a software configuration, these components may be implemented by one or more program codes and computer instructions that are executed by a processor. For example, the components illustrated FIG. 3 may be blocks of ASIC, ALU, FPU, FPGA, CPU or AP.

The memory controller 300 may further include an internal buffer 306 and a plurality of queues Q1, Q2, Q3 and Q4. Although four queues are illustrated in FIG. 3, the disclosure is not limited thereto, and as such, according to another embodiment, the number of queues may be less than or greater than four. According to an embodiment, the internal buffer 306 may be implemented in buffer memory 216. However, the disclosure is not limited thereto, and as such, according to another embodiment, the internal buffer 306 may be implemented as s separate memory device.

The memory controller 300 may receive a plurality of memory requests from a host through a host interface 301. The plurality of memory requests may include a first memory request C1, a second memory request C2, and an n-th memory request Cn, n is an integer greater than two. According to an embodiment, the CXL requests may include, but are not limited to, any one of a read request, a write request, a read modify write (RMW) request and a partial write request. The memory requests may be CXL requests. However, the disclosure is not limited thereto, and as such, according to another embodiment, the memory requests may be a based on another standard.

The memory controller 300 may classify the plurality of memory requests C1, C2, ... , Cn into one or more groups. For example, the memory controller 300 may classify the plurality of memory requests C1, C2, ... , Cn into one or more groups based on characteristics corresponding to the memory requests. The memory controller 300 may classify or group the plurality of memory requests C1, C2, ... , Cn into one or more groups based on a priority or an importance associated with the memory requests. For example, the memory controller 300 may classify or group the plurality of memory requests C1, C2, ... , Cn into one or more groups based on a Quality of Service (QoS) or a service level agreement (SLA). However, the disclosure is not limited thereto, and as such, according to another embodiment, the plurality of memory requests may be classified based on other criteria.

The memory controller 300 may classify the plurality of memory requests C1, C2, ... , Cn into one or more groups based on a traffic class. According to an embodiment, traffic classes (TC) may be defined based on the type of data being accessed, or the frequency of access. For example, the traffic classes (TC) may be defined or specific by the host 100, and may be included in the memory request. According to an embodiment, the CXL standard includes a TC (reserved) field. For example, the host 100 may specify an identification (ID) of the traffic class in the TC field of the memory request. However, the disclosure is not limited thereto, and as such, according to another embodiment, the traffic class may be defined by or other factors. For example, the traffic class may be identified or specified by the host 100 based on an importance of an address region or a type of data requested in the memory request.

The host interface 301 of the memory controller 300 may classify a first memory request C1 into a first group TC1 based on the first memory request C1 satisfying a criterion of a first traffic class, a second memory request C2 into a second group TC2 based on the second memory request C2 satisfying a criterion of a second traffic class, a third memory request C3 into a third group TC3 based on the third memory request C3 satisfying a criterion of a third traffic class, and a fourth memory request C4 into a fourth group TC4 based on the fourth memory request C4 satisfying a criterion of a fourth traffic class. For example, the memory controller 300 may classify a first memory request C1 into a first group TC1 based on the first memory request C1 including a first information in the TC field matching a first traffic class, a second memory request C2 into a second group TC2 based on the second memory request C2 including a second information in the TC field matching a second traffic class, a third memory request C3 into a third group TC3 based on the third memory request C3 including a third information in the TC field matching a third traffic class, and a fourth memory request C4 into a fourth group TC4 based on the fourth memory request C4 including a fourth information in the TC field matching a fourth traffic class.

The host interface 301 of the memory controller 300 may classify the plurality of memory requests C1, C2, ... , Cn into one or more groups. However, the disclosure is not limited thereto, and as such, according to another embodiment, another component of the memory controller 300 may classify the plurality of memory requests C1, C2, ... , Cn into one or more groups.

The host interface 301 may place or store the classified plurality of memory requests C1, C2, ... , Cn into one or more queues. The one or more queues may be referred to as request queues. For example, the host interface 301 may place memory requests in the first group TC1 in a first queue Q1, memory requests in the second group TC2 in a second queue Q2, memory requests in the third group TC3 in a third queue Q3 and memory requests in the fourth group TC4 in a fourth queue Q4.

The scheduler 303 of the memory controller 300 may fetch a batch of memory requests from the queues. For example, the scheduler 303 may fetch a batch of memory requests from the queues in a round-robin fashion. For example, a first group of memory requests from the first queue Q1 may be selected by the scheduler 303, followed by a second group of memory requests from the second queue Q2, followed by a third group of memory requests from the third queue Q3 and followed by a fourth group of memory requests from the fourth queue Q4. For example, each of the first to fourth groups of memory requests may be removed from the respective one of the first to fourth queues Q1 to Q4 in bursts. In an example, the burst size may equal to or greater than one. However, the disclosure is not limited thereto, and as such, the memory requests may be selected or removed from the queues in a manner different from the round-robin fashion. For example, the memory requests may be selected or removed from the queues based on a priority scheme (e.g., priority associated with the memory requests in the queues), first in first out scheme, etc.

The scheduler 303 may bind one or more memory requests included in a batch of memory requests fetched from a current queues to one or more block requests. For example, the scheduler 303 may associate fetched memory requests with one or more outstanding block requests. The one or more outstanding block requests may be a previously generated block request based on a previous memory request. The previously generated block request may be a block request generated in response to a previous memory request. The previous memory request may be a memory request previously fetched from any of the queues. However, the disclosure is not limited thereto, and as such, according to another embodiment, the previous memory request may be a memory request previously fetched from a same queue as the current queue. The batch of memory requests may be fetched and processed sequentially. For example, the scheduler 303 may fetch a first memory request in the batch of memory requests and associate the first memory request with the outstanding block requests, and subsequently fetch a second memory request from the batch of memory requests and associate the second memory request with the outstanding block requests.

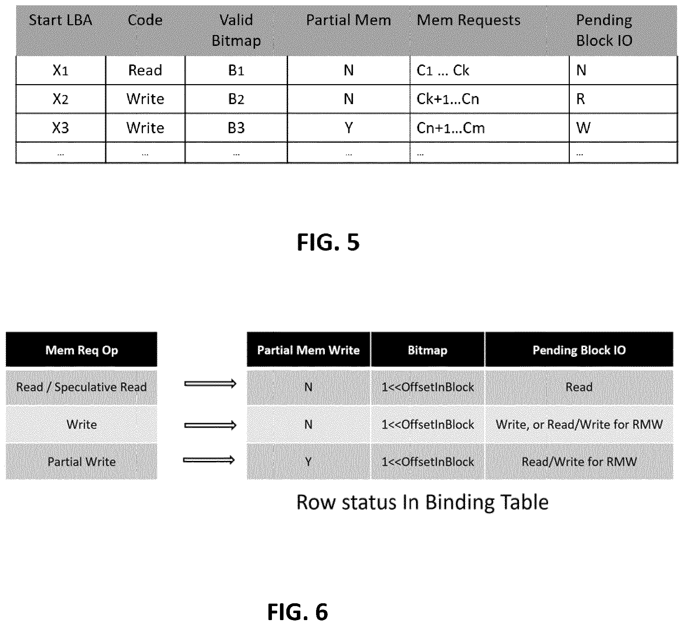

The scheduler 303 may include a request binding table, which has one or more rows, each of the rows associating one or more requests with a logic block address (LBA). The request binding table will be described in more detail with reference to FIGS. 5, 6, and 7. The scheduler 303 may check the request binding table to determine if a memory request fetched from the queue corresponds to a block request existing in the request binding table. In an embodiment, the scheduler 303 may first convert or translate the host physical addresses (HPAs) corresponding to the one or more memory requests fetched from the queue to logical block addresses (LBAs). The scheduler 303 may check the request binding table to determine if the LBA corresponding to the memory request fetched from the queue corresponds a block request existing in the request binding table. For example, the scheduler 303 may determine that the LBA matches a block request existing in the request binding table. In another embodiment, the scheduler 303 may identify a block request existing in the request binding table that matches the LBA of the memory request fetched from the queue. In examples in which the fetched memory request is a request to access (e.g., read or write requests) a block existing in the binding request table, the scheduler 303 may bind the fetched memory request to a table row corresponding to the block existing in the binding request table. On the other hand, in examples in which the fetched memory request is a request to access (e.g., read or write requests) a block that does not exist in the binding request table, the scheduler 303 may add a new row in the binding request table with the request. According to an embodiment, the memory request fetched from the queue may include a command identifier in addition to the HPA, and the scheduler 303 may identify a command (e.g., read or write ) to perform with respect to HPA based on the command identifier. According to an embodiment, the commands may be fetched or received from the host based on the command identifiers.

In examples in which an incoming memory request is a read request to read data from a block existing in the request binding table, the scheduler 303 or the memory controller 300 may associate or bind the incoming memory request to a table row. In examples in which an incoming memory request is a read request to read data from a block in a write row, the scheduler 303 or the memory controller 300 may copy data from memory request or memory requests in the write row to the memory request. For example, the memory controller 300 may copy the data from a memory request in the request binding table that is in a write row, and output a memory response including the copied data. In examples in which an incoming memory request is a write request to write data to a block existing in the request binding table, the scheduler 303 or the memory controller 300 may associate or bind the request to a table row. However, in examples in which there are no existing block in the request binding table matching an incoming memory request or the existing block in the request binding table matching the incoming memory request is with a pending block write, the scheduler 303 or the memory controller 300 may add a new table row in the request binding table with the incoming memory request.

The scheduler 303 may output a signal to a block request sender 304 to generate a block input/output (IO) request corresponding to one or more of the outstanding block requests. The block IO request conforms to a protocols of block interface 302. For example, the scheduler 303 may output a logical block address (LBA) to the block request sender 304. The scheduler 303 may output the signal to generate the block IO request after determining that the processing of the memory requests in the queues are completed.

The scheduler 303 may determine that the memory request processing is completed based on at least a threshold number of memory requests from all the queues have been processed. For example, the scheduler 303 may determine that the memory request processing is completed based on a determination that at least a threshold number of memory requests from all the queues have been processed. The threshold number may be a batch size. For example, the scheduler 303 may determine whether a number of fetched memory requests from a first queue Q1 equals a batch size. Furthermore, based on a determination that the number of fetched memory requests from the first queue Q1 equals the batch size, the scheduler 303 may fetch memory requests from a next queue (e.g., a second queue Q2) and repeats the determination of whether fetched memory requests equals the batch size until memory requests from all the queues (e.g., a third queue Q3 and a fourth queue Q4) have be processed in a round robin manner. The batch size may indicate a number of memory requests to be processed from a current queue before moving to the next queue. For example, the batch size may be 64 memory requests in an example in which memory request size 64B, and the block size is 4KB. However, the disclosure is not limited thereto, and as such, the batch size may be more or less than 64 memory requests. Upon receiving block requests, the block request sender 304 may generate a block IO request for one block request received from the received from the scheduler 303. The one block request may correspond to one or more memory IOs in a row of the binding request table. The generated block IO request may conform to a protocol of the block interface 302 or may conform to a protocol of the block device 320. The block request sender 304 transmits one or more block IO requests to the block device 320. For example, the block request sender 304 may transmit the one or more block IO requests to the block device 320 through the block interface 302.

The internal buffer 306 may receive one or more blocks (e.g., block responses) from the block device 320 based on the one or more block IO requests. For example, the internal buffer 306 may store the block responses from the block device 320 along with a row number. The response generator 305 may receive the block responses along with a row number. The internal buffer may be included in the response generator 305.

The memory response generator 305 may generate memory responses based on a completion of a block IO request. For example, the memory response generator 305 may generate memory responses based on a determination that a block IO request is completed. For example, the memory response generator 305 may generate memory responses based on a signal from the block device indicating that the block IO request is completed. The memory response generator 305 may obtain a row from the request binding table matching the row number associated with the block response, and generate memory responses. If the completed block IO request is a block read request, the memory response generator 305 may store a reference to data from the block response into each memory request in the row obtained by the memory response generator 305. For example, the memory response generator 305 may receive a block of data from the internal buffer 306 and store a reference to data from the block of data for each memory request. However, the disclosure is not limited thereto, and as such, according to another embodiment, if the completed block IO request is a block read request, the memory response generator 305 may copy data from the block response into each memory request in the row obtained by the memory response generator 305. If the completed block IO request is a block read request corresponding to an RMW memory request, the memory response generator 305 may receive a block of data from the internal buffer 306, copy data from the RMW memory request into the received block of data to obtain to modified block of data, and generate a block write request with the modified block of data. The block request sender 304 may generate a block IO request to update the block device based on the block write request with the modified block of data.

Accordingly, the memory controller 300 may be able to more efficiently use an available bandwidth and reduce latency. Moreover, by converting multiple memory requests to a single sequential block request, overhead associated with processing multiple small requests may be reduced and overall performance may be improved. Furthermore, the memory controller 300 may treat speculative memory reads as regular memory reads without a response to the host. A speculative memory read is a read operation that may be performed before it is guaranteed that the read data is needed by the requesting host device for actual use. Thus, overhead associated with speculative reads may be reduced and overall performance may be improved. Thus, one or more embodiments of the disclosure provide a memory request scheduling system without a cache and method of operation the memory request scheduling system that aims to provide optimal block IO amplification and memory request latency by using a request binding table.

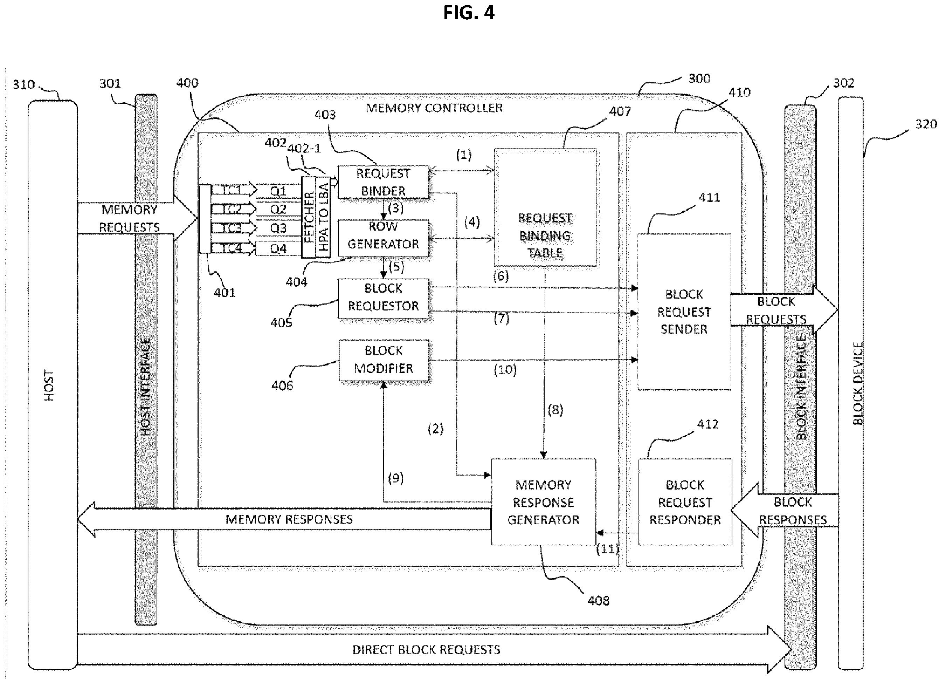

FIG. 4 illustrates a detailed configuration of a memory controller 300 in a system including a host and a memory according to an embodiment.

The memory controller 300 illustrated in FIG. 4 may be a detailed version of the memory controller 300 illustrated in FIG. 3, and as such, duplicate details of components and functions from the description in FIG. 3 may be omitted. The memory controller 300 may include a scheduler 400 and a block access module 410. Moreover, the memory controller 300 may include a host interface 301 for facilitating a communication between a host 310 and the memory controller 300, and a block interface 302 for facilitating a communication between the memory controller 300 and a block device 320 (e.g., SSD).

The scheduler 400 may include a classifier 401, a fetcher 402, a HPA to LBA translator 402-1, a request binder 403, a row generator 404, a block requestor 405, a block modifier 406, a request binding table 407, and a memory response generator 408. According to an example embodiment, these components of the scheduler 400 may be implemented by hardware, software or a combination of hardware and software. For example, at least one of these components of the scheduler 400 and/or other components of the memory controller 300 may be implemented by the CPU 213 illustrated in FIG. 2. However, the disclosure is not limited thereto, and as such, according to another embodiment, at least one of these components of the scheduler 400 may be implemented in a different manner. For example, in case a hardware configuration, at least one of these components may be implemented by one or more electronic circuits, and in case of a software configuration, at least one of these components may be implemented by one or more program codes and computer instructions that are executed by a processor. According to other embodiments, one or more of these components of the scheduler 400 may be omitted, or one or more other components may be added to the scheduler 400.

The memory controller 300 may receive a plurality of memory requests, from the host 310 through the host interface 301. The classifier 401 of the memory controller 300 may classify the plurality of memory requests into one or more groups. For example, the classifier 401 of the memory controller 300 may classify or group the plurality of memory requests into the one or more groups based on the traffic class specified by the host 310. For example, the host 310 may specify a traffic class to the plurality of memory requests based on characteristics corresponding to the memory request. The host 310 may specify the plurality of memory requests into one or more groups based on a priority or an importance associated with the memory requests. However, the disclosure is not limited thereto, and as such, according to another embodiment, the plurality of memory requests may be specified based on other criteria.

The classifier 401 may be a traffic class (TC) classifier configured to classify the plurality of memory requests into one or more traffic classes based on a traffic class. For example, the classifier 401 may classify the plurality of memory requests into one of a first class TC1, a second class TC2, a third class TC3, and a fourth class TC4. According to an embodiment, traffic classes may be defined based on a type of data being accessed, or a frequency of access by the host 310. However, the disclosure is not limited thereto, and as such, according to another embodiment, the traffic class may be defined by other factors.

The classifier 401 of the memory controller 300 may classify the plurality of memory requests C1, C2, ... , Cn into one or more groups. However, the disclosure is not limited thereto, and as such, according to another embodiment, another component of the memory controller 300 may classify the plurality of memory requests C1, C2, ... , Cn into one or more groups.

The classifier 401 may place or store the classified plurality of memory requests into a plurality of queues (e.g., Q1, Q2, Q3 and Q4). For example, the memory controller 300 may queue the first group TC1 of memory requests in a first queue Q1, the second group TC2 of memory requests in a second queue Q2, the third group TC3 of memory requests in a third queue Q3 and the fourth group TC4 of memory requests in a fourth queue Q4.

The fetcher 402 of the memory controller 300 may fetch a batch of memory requests from one of the queues Q1-Q4. For example, the fetcher 402 may fetch a batch of memory requests from the queues Q1-Q4 in a round-robin fashion. For example, a group of memory requests from the first queue Q1 may be selected by the fetcher 402, followed by a group of memory requests from the second queue Q2, followed by a group of memory requests from the third queue Q3 and followed by a group of memory requests from the fourth queue Q4. However, the disclosure is not limited thereto, and as such, the fetcher 402 may select or fetch the memory requests from the queues Q1-Q4 in a different manner. Although FIGS. 3 and 4 illustrate a plurality of queues, the disclosure is not limited thereto, and as such, according to an embodiment, the number of queues may be one. In an example in which the number of queues is one, the incoming memory requests may not be grouped, and as such, the fetcher 402 may receive the memory requests from the host interface and send to the request binder 403. According to an embodiment, after a batch of memory requests are selected or removed from one of the queues Q1-Q4, information in the respective queue may be cleared. In another embodiment, information in the respective queue may be maintained (or kept) until new memory requests are classified into the respective queue by the classifier 401.

The request binder 403 may receive one or more memory requests from the fetcher 402, and bind the one or more fetched memory requests to an outstanding block request. In an embodiment, the HPA to LBA translator 402-1 may convert or translate the host physical addresses (HPAs) corresponding to the one or more memory requests fetched by the fetcher 402 to logical block addresses (LBAs) and sends the one or more memory requests to the request binder 403 including the LBAs. For example, the request binder 403 may associate the fetched memory requests with the outstanding block requests. According to an embodiment, an outstanding block request may be a previously generated block request based on a previous memory request. The previously generated block request may be a block request generated in response to a previous memory request. The previous memory request may be a memory request previously fetched from any of the queues. However, the disclosure is not limited thereto, and as such, according to another embodiment, the previous memory request may be a memory request previously fetched from a same queue as the current queue.

According to an embodiment, the scheduler 400 may include a request binding table 407. The request binding table 407 may include one or more rows. Each of the one or more rows may associate one or more memory requests with a logic block address (LBA). The request binder 403 may check the request binding table 407 to determine if a memory request fetched from the queue corresponds to a block existing in the request binding table 407. In examples in which the fetched memory request is a request to access (e.g., read or write requests) a block existing in the request binding table 407, the request binder 403 send a signal (1) to bind the fetched memory request to a row in the request binding table 407 corresponding to the block existing in the binding request table. On the other hand, in examples in which the fetched memory request is a request (e.g., a read request or a write request) to access a block that does not exist in the binding request table, the request binder 403 may notify (3) or instruct the row generator 404 to add a new row in the binding request table with the memory request. The row generator 404 may add a new row in the binding request table with the request. For example, the row generator 404 may send a signal (4) to the request binding table 407 to add the new row with the memory request. For example, the row generator 404 may send a block destination address (LBA), bitmap information and the memory request to the request binding table 407. According to an embodiment, the HPA to LBA translator 402-1 may convert or translate the host physical addresses (HPAs) corresponding to the one or more memory requests fetched by the fetcher 402 to LBA. In addition, the HPA to LBA translator 402-1 may obtain the bitmap information corresponding to the memory request. However, the disclosure is not limited hereto, and as such, another component of the memory controller may obtain information added to the binding request table.

In examples in which an incoming memory request is a request to read from a block existing in the request binding table 407, the request binder 403 may send a signal (1) to associate or bind the incoming memory request to a row in the request binding table 407 corresponding to the existing block. In examples in which an incoming memory request is a read request to read from a block in a write row, the request binder 403 may send a signal (2) to the memory response generator 408 to copy data from the block in the write row to the memory request. For example, the request binder 403 may determine whether write rows corresponding to the memory request are found in the request binding table 407. For example, the request binder 403 may determine if there is a match between the block destination address of the memory request and the block destination addresses of one or more rows in the request binding table 407. Moreover, the request binder 403 may determine if a request offset is valid in the bitmap. If it is determined that the block destination address of the memory request matches with the block destination addresses of one or more rows in the request binding table 407, request binder 403 may send a signal (2) to the memory response generator 408. Moreover, the memory response generator 408 may copy to a first memory request, which is the read request, the data in a buffer corresponding to a second memory request in the request binding table 407 that is in the write row, and output a memory response including the copied data. However, the disclosure is not limited thereto, and as such, according to another embodiment, the memory response generator 408 may retrieve data from the write rows of the request binding table 407. The memory response generator 408 may copy the data from write requests in the request binding table 407, and output a memory response including the copied data. For example, the memory controller may retrieve data from the write rows of the request binding table 407 corresponding to the fetched memory request, and generate an memory response by including the retrieved data.

In examples in which an incoming memory request is a write request to write data to a block existing in the request binding table 407, the request binder 403 may send the signal (1) to associate or bind the request to the row. However, in examples in which there are no existing blocks in the request binding table 407 matching an incoming memory request or there is an existing block with a pending block write IO in the request binding table 407 matching the incoming memory request, the request binder 403 may instruct the row generator 404 to add a new row in the request binding table 407 with the incoming memory request.

The scheduler 400 may output a signal to generate the block IO request after determining that the processing of the memory requests in the queues are completed. The scheduler 400 may notify the block requestor 405 with a signal (5) through the row generator 404 that the processing of the memory requests in the queues are completed. The block requestor 405 may output a signal to a block request sender 411 of the block access module 410 to generate a block input/output (IO) request corresponding to one or more of the outstanding block requests as depicted by (6) and (7) in FIG. 4. According to an example, embodiment, the block requestor 405 may output the signal to the block request sender 411 to generate the block input/output (IO) request based on the signal (5) indicating a completion of the processing of the memory requests in the queues. However, the disclosure is not limited thereto, and as such, according to another embodiment, the block requestor 405 may output a signal to the block request sender 411 to generate the block input/output (IO) request based on a different criterion or a different schedule. For example, according to another embodiment, the block requestor 405 may output the signal to the block request sender 411 to generate the block input/output (IO) request before the completion of the processing of the memory requests in the queues.

In examples in which the memory request corresponds to an unaligned-block row write, the block requestor 405 may output a signal (6) including a read memory operation code, a logical block address (LBA), length information, and row information to the block request sender 304. However, the information sent to the block request sender 411 is not limited to the read memory operation code, the LBA, the length information, and the row information. As such, according to another embodiment, some of this information may be omitted, and/or other information may be included. In examples in which the memory request is read or the memory request corresponds to an aligned-block row write, the block requestor 405 may output a signal (7) including an operation code, an LBA, length LEN information, and row information to the block request sender 304. However, the information sent to the block request sender 411 is not limited to the operation code, the LBA, the length information, and the row information. As such, according to another embodiment, some of this information may be omitted, and/or other information may be included. According to an embodiment, in an unaligned block row write, when converting memory requests in a row, a complete block write may not be possible, and as such, a read from an read modified write (RMW) may be needed. As such, based on signal (6), the block request sender 304 may performed a read operation, and the unaligned block row write may be completed based on signal (10) (to perform write) generated by the block modifier 406 described below. On the other hand, in an aligned block row write, a complete block write may be performed or constructed without preforming a RMW. As such, based on signal (7), the block request sender 304 may performed a write operation.

The scheduler 400 may determine that the memory request processing is completed based on at least a threshold number of requests from all the queues being processed. For example, the scheduler 400 may determine that the memory request processing is completed based on a determination that at least a threshold number of requests from all the queues is processed. The threshold number may be a batch size. For example, the scheduler 400 may determine whether a number of fetched memory requests from a first queue Q1 equals a batch size. Furthermore, based on a determination that the number of fetched memory requests from the first queue Q1 equals the batch size, the scheduler 400 may fetch requests from a next queue (e.g., a second queue Q2) and repeats the determination of whether fetched memory requests equals the batch size until memory requests from all the queues (e.g., a third queue Q3 and a fourth queue Q4) have be processed in a round robin manner.

The block access module 410 may include a block request sender 411 and a block request responder 412. The block request sender 411 and the block request responder 412 may be implemented by hardware, software or a combination of hardware and software. For example, the block request sender 411, the block request responder 412 and/or other components of the memory controller 300 may be implemented by the CPU 213 illustrated in FIG. 2. However, the disclosure is not limited thereto, and as such, according to another embodiment, the block request sender 411 and the block request responder 412 may be implemented in a different manner. For example, in case a hardware configuration, these components may be implemented by one or more electronic circuits or another processor, and in case of a software configuration, these components may be implemented by one or more program codes and computer instructions that are executed by a processor. According to other embodiments, one or more of the components of the scheduler 400 may be omitted, or one or more other components may be added to the scheduler 400.

According to an embodiment, upon receiving block requests from block requestor 405, the block request sender 411 may generate a block IO for the block request. The block request sender 411 may repeat a block IO generation process for the block requests from the block requestor 405. The block request sender 411 transmits one or more block IO requests to the storage device (e.g., SSD). For example, the block request sender 411 may transmit the one or more block IO requests to the block device 320 through the block interface 302. For example, the block request sender 411 transmits the one or more block IO requests conforming to a protocol of block the interface 302 or the block device 320.

The block request responder 412 may receive one or more blocks (e.g., block responses) from the SSD based on the one or more block IO requests. For example, the block request responder 412 may store the block responses from the SSD along with a row number. The response generator 408 may receive signal (11) including the block responses along with a row number from the block request responder 412.

The memory response generator 408 may generate memory responses based on a completion of a block IO request from the block device. For example, the memory response generator 408 may generate memory responses based on a determination that a block IO request from the block device is completed. For example, the memory response generator 408 may find a row from the request binding table 407 matching the row number associated with the block response, and generate memory responses. According to an embodiment, if a block read is completed, the memory response generator 408 may store a reference to data into each memory requests, and if a block read is for RMW, the memory response generator 408 may copy data from the memory write to the read data, and generate a block write request with the modified block.

The memory response generator 408 may receive a block IO completion signal from the block access module 410. The memory response generator 408 may find a row from the request binding table 407 matching a row number associated with the block response from the block device (e.g., storage device).

The memory response generator 408 may determine if a block read request is completed. After the block read request is completed, the memory response generator 408 may determine if the row from the request binding table 407 is for a write request. If it is determined that the row from the request binding table 407 is for a write request, the memory response generator 408 may mark the row from the request binding block as write pending, update the block data received from the block device with data from the memory requests corresponding to the row from the request binding table 407 (e.g., signal (9) in FIG. 4), and generate a block write request based on the updated block data (e.g., signal (10) in FIG. 4).

Moreover, if it is determined that the row from the request binding table 407 is not for a write request, the memory response generator 408 may generate memory response based on the block data received from the block device and the row from the request binding table 407, and remove the row from the request binding table 407. For example, based on the block data received from the block device, the memory response generator 408 may generate a memory response for each command in a row from the request binding table 407.

FIGS. 5 and 6 illustrate request binding tables according to various embodiments. The request binding tables shown in FIGS. 5 and 6 correspond to the request binding table 407 described above in reference to FIG. 4.

Referring to FIG. 5, the request binding table illustrated in FIG. 4 may include a row including a destination block address (e.g., logical block address LBA) associated with one or more memory requests. For example, a row describes a destination block address and associates the destination block address with one or more memory requests.

According to an embodiment, the request binding table may include, but is not limited to, a start LBA column, a code column, a valid bitmap column, a partial memory column, memory requests column, and pending block IO column.

The start LBA column may indicate a starting address of a row block. The code column may indicate a block IO operation (e.g., opcode). For example, the block IO operation may include a block IO read operation or a block IO write operation.

The valid bitmap column may indicate whether a memory request is bound to an associated offset in a block. For example, each bit in valid bitmap indicates whether a memory request is bound to the associated offset in a block. For example, each position in the bitmap corresponds to an offset within the block. The partial memory column may indicate whether a partial memory write exists in bound memory requests.

The memory requests column indicates memory requests that are associated with each the block request. For example, the memory requests column includes all the memory requests that are associated with the row of the block request. For example, the memory requests column includes all the memory requests that are associated with the logical block request (LBA) in each row of the binding request table. For example, a first row in the binding request table may include a first starting LBA and a plurality of first memory requests associated with the first starting LBA, and a second row in the binding request table may include a second starting LBA and a plurality of second memory requests associated with the second starting LBA. In examples in which a new memory request is received which matches one of the LBAs in the request binding table, the memory controller may append the memory request to the plurality of requests already in the row. For example, if the new memory request matches the first starting LBA row in the request binding table, the memory controller may append the new memory request to the plurality of first requests already in the first row. However, the disclosure is not limited thereto, and as such, the memory requests may be associating with a pending block request in a different manner.

The block IO column may indicate a type of block IO that is issued. For example, the memory controller may perform additional write when a pending block IO is indicated as read pending ("R") for a write row. The memory controller may append a write memory request to the matching write row indicated as no IO pending ("N"). The memory controller may generator a new row for an incoming memory request if the matching row is indicated as write pending ("W"). The row must have a unique tuple of a start LBA, an Opcode, and a pending block IO.

Although an embodiment illustrates that the one or more memory requests are associated in a table, the disclosure is not limited thereto. As such, according to another embodiment, the one or more memory requests may be associated in a different manner. For example, the one or more memory requests may be associated in a storage. As another example, the one or more memory requests may be associated in a buffer.

According to an embodiment, the memory controller 300 may fetch a memory request in one of a plurality of queues storing the plurality of memory requests, compare a destination address of the memory request with a first stored destination address, among one or more stored destination addresses in a storage, associate the memory request with the first stored destination address in the storage based on a match between the destination address of the memory request and the first stored destination address in the storage, and process one or more entries in the storage in response to the memory request.

According to an embodiment, the memory controller 300 may receive a memory request, among the plurality of memory requests from the host 310, compare a destination address of the memory request with one or more stored destination addresses in a storage, process the memory request based on a first stored destination address, among the one or more stored destination addresses, based on the destination address of the memory request matching the first stored destination address, and add the destination address of memory request as a new entry in the storage based on the destination address of the memory request not matching any of the one or more stored destination addresses. For example, the destination address of memory request may be added as a new entry in the storage based on a determination that the destination address of the memory request is missing among the one or more stored destination addresses.

According to an embodiment, the memory controller 300 may obtain first information from a storage including one or more information. Each of the one or more information may include one of a destination address, a memory operation and one or more memory requests associated with each other. The memory controller 300 may determine a type of the memory operation, and process the first information based on the type of the memory operation.

FIG. 6 illustrates conversions of memory request to a block row in a request binding table according to embodiments. The memory request (e.g., MemOp) may be one of a read, speculative read, write and partial write. The block operation (e.g., Pending Block IO) corresponding to the memory operation may be as follows. The read operation and speculative read operation may have a Pending Block IO of read, and the write operation and partial write operation may have a Pending Block IO of write or read/write for RMW. Moreover, a partial write flag may be included. For example, the read operation, the speculative read operation and the write operation are indicated as not being partial write ("N"), and the partial write is indicated as not being partial write ("Y"). The block size can be multiple sector size. A memory access unit can vary depending on a memory access interface. For example, the memory access unit may be 64B in in CXL 2.1. The Block Address and the Offset In Block may satisfy the following equation:

$$\text{Equation 1: Block Address} = \text{Memory Address / Block Size, and}$$

and

$$\text{Equation 2: Offset In Block} = (\text{Memory Address} - (\text{Block Address} * \text{Block Size})) / \text{Memory Access Unit}$$

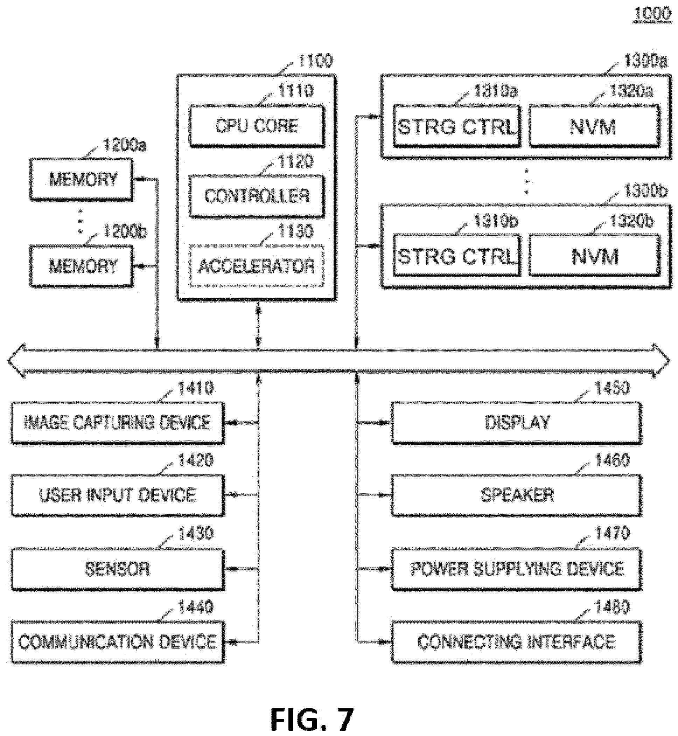

FIG. 7 is a diagram of a system 1000 to which embodiments may be applied. The system 1000 of FIG. 1 may be, for example, a mobile system, such as a portable communication terminal (e.g., a mobile phone), a smartphone, a tablet personal computer (PC), a wearable device, a healthcare device, or an Internet of things (IoT) device. However, the system 1000 of FIG. 1 is not necessarily limited to the mobile system and may be a PC, a laptop computer, a server, a media player, or an automotive device (e.g., a navigation device).

Referring to FIG. 7, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one CPU core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as a chip that is physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include memory controllers (STRG CTRL) 1310a and 1310b and Non-Volatile Memories (NVMs) 1320a and 1320b configured to store data via the control of the memory controllers 1310a and 1310b. Although the NVMs 1320a and 1320b may include flash memories having a two-dimensional (2D) structure or a three-dimensional (3D) VNAND structure, embodiments are not limited thereto, and the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have types of SSDs or memory cards, and may be removably combined with other components of the system 1000 through an interface, such as the connecting interface 1480 described below. The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

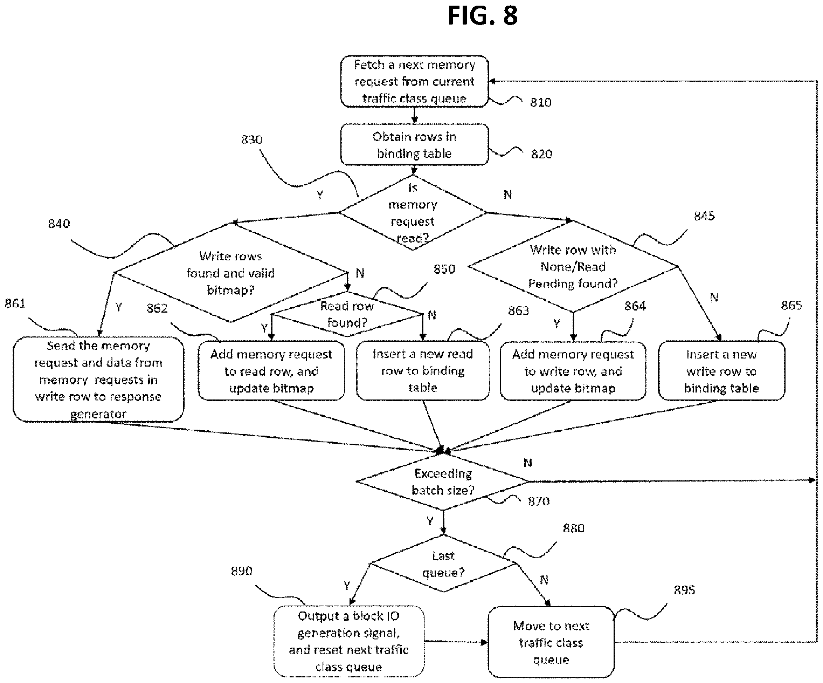

FIG. 8 illustrates a flowchart illustrating fetch operations of a memory controller in a system according to an embodiment.

In operation 810, the method may include fetching a memory request from a queue, among a plurality of queues. The plurality of queues may be classified according to one or more characteristics of the memory request. For example, the memory controller 300 may fetch the next unprocessed memory request in a current queue selected for processing. The plurality of queues may be classified according to a traffic class. However, the disclosure is not limited thereto, and as such, according to another embodiment, the plurality of queues may be classified based on another criterion.

In operation 820, the method may include obtaining rows from a binding request table. For example, the memory controller 300 may obtain information about the rows that are in the request binding table.

In operation 830, the method may include identifying whether the memory request is a read request. For example, the memory controller 300 may determine whether the memory request is a read request. If it is determined that the memory request is a read request in operation 830, the method proceeds to operation 840. However, if it is determined that the memory request is not a read request, the method proceeds to operation 845.

In operation 840, the method may include determining whether write rows corresponding to the memory request are found in the request binding table. For example, memory controller 300 may determine if there is a match between the block destination address of the memory request and block destination addresses in one or more rows in the request binding table. Moreover, the method may determine if a request offset is valid in the bitmap. If it is determined that the block destination address of the memory request matches with the block destination addresses in the one or more rows in the request binding table, the method proceeds to operation 861. However, if there is no write rows found with block destination addresses matching the block destination address of the memory request, the method proceeds to operation 850.

In operation 861, the method may include sending the memory request and data from memory requests in the write rows in the request binding table to the memory response generator, which outputs a memory response including the data. For example, the memory controller 300 may retrieve data from the memory requests in the write rows of the request binding table corresponding to the fetched memory request, and generate a memory response by copying the retrieved data for the memory request.

In operation 850, the method may include determining whether read row corresponding to the fetched memory request is found in the request binding table. If it is determined that the block destination address of the memory request matches with the block destination addresses of a read row in the request binding table, the method proceeds to operation 862. However, if there is no read rows found with block destination addresses matching the block destination address of the memory requests, the method proceeds to operation 863.

In operation 862, the method may include adding the fetched memory request to the read row already present in the request binding table. For example, the memory controller 300 may add the memory request to a list including one or more previous memory requests associated with the block destination address. In operation 862, the method may further include updating the bitmap. In operation 863, the method may include inserting a new read row to the request binding table. For example, the memory controller 300 may insert a new row including the block destination address of the fetched memory request.

In operation 845, the method may include determining whether a write row is found with none/read pending block IO indicated as None ("N") or Read ("R") in the request binding table. If it is determined that a write row with none/read pending block IO is found, the method proceeds to operation 864. However, if there is no write row with none/read pending block IO found, the method proceeds to operation 865. In operation 864, the method may include add the fetched memory request to the write row. The method may further include updating the bitmap. In operation 865, the method may include inserting a new write row to the request binding table.

In operation 870, the method may include determining whether a threshold number of requests have been processed from the current queue. The threshold number may be a batch size. For example, the memory controller may determine whether a number of fetched memory requests from the current queue equals a batch size. If it is determined that the number of fetched memory requests from the current queue does not exceed the batch size, the method proceeds operation 810, where the method repeats by fetching a next memory request from the current queue. However, if it is determined that the number of fetched memory requests from the current queue equals the batch size, the method proceeds operation to operation 880.

In operation 880, the method may include determining whether the current queue is the last queue among the plurality of queues classified by the memory controller. If it is determined that the current queue is the last queue, the method proceeds operation 890. However, if it is determined that the current queue is not the last queue, the method proceeds to operation to operation 895.

In operation 890, the method may include generating a block IO generation signal and outputting the block IO generation signal to initiate block IO. Moreover, the method may include resetting next traffic class queue to restart the method to process a new batch of memory requests. In operation 895, the method may include changing the current traffic class queue to the next traffic class queue. For example, the memory controller may select the next queue, among the plurality of queues, as the current queue in a round robin manner. According to an embodiment, the memory controller may wait until all entries in the batch are fetched before generating the block IO generation signal. However, the disclosure is not limited thereto, and as such, according to another embodiment, the memory controller generate the block IO generation signal based on a different criterion or schedule.

Although FIG. 8 illustrates the method being performed in a particular order, the disclosure is not limited thereto, and as such, according to various other example embodiments, the operations of the method illustrated in FIG. 8 may be performed in a different order. For example, the operation 820 of obtaining rows in the request binding table may be performed after the operation 820 of determining whether the request is a read request.

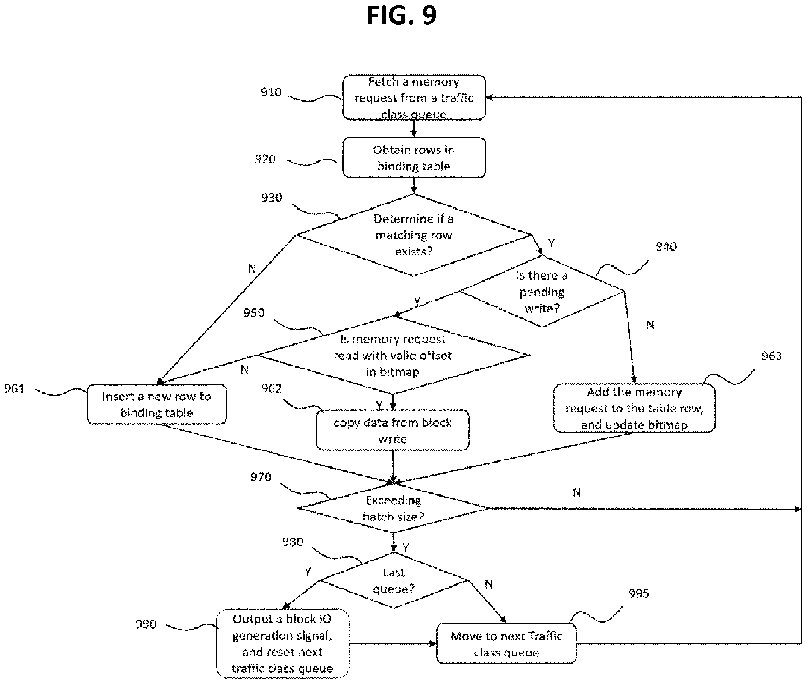

FIG. 9 illustrates a flowchart illustrating fetch operations of a memory controller in a system according to another embodiment.

In operation 910, the method may include fetching a memory request from a queue, among a plurality of queues classified according to one or more characteristics of the memory request. For example, the memory controller may fetch the next unprocessed memory request in a current queue selected for processing. The queues may be classified according to a traffic class. However, the disclosure is not limited thereto, and as such, according to another embodiment, the queues may be classified based on another criterion.

In operation 920, the method may include obtaining rows from a binding request table. For example, the memory controller 300 may obtain information about the rows that are in the request binding table.

In operation 930, the method may include determining whether there is a match between the block destination address of the fetched memory request and the block destination addresses of one or more rows in the request binding table. If it is determined that the block destination address of the memory request matches with the block destination addresses of one or more rows in the request binding table, the method proceeds to operation 940. However, if there are no rows found with block destination addresses matching the block destination address of the fetched memory request, the method proceeds to operation 961.

In operation 961, the method may include inserting a new row to the request binding table. For example, the memory controller 300 may insert a new row including the block destination address of the fetched memory request.

In operation 940, the method may include determining if there is a pending write in the request binding table. For example, the memory controller may determine whether a row with a pending write is found in the request binding table. If it is determined that a row with the pending write is found in the request binding table, the method proceeds to operation 950. However, if there are no rows with pending write found, the method proceeds to operation 963.

In operation 950, the method may include determining if the memory request is a read request with valid offset in bitmap. If it is determined that the memory request is a read request with valid offset in bitmap, the method proceeds to operation 962. However, if there is no row with pending write found, the method proceeds to operation 961. In operation 961, the method may include inserting a new row to the request binding table. For example, the memory controller 300 may insert a new row including the block destination address of the fetched memory request.

In operation 962, the method may include copying data from a block write request. For example, the method may include sending the memory request and data from memory requests in the write rows in the request binding table to the memory response generator, which outputs a memory response including the data. For example, the memory controller 300 may retrieve data from the memory requests in the write rows of the request binding table corresponding to the fetched memory request, and generate a memory response by copying the retrieved data for the memory request.

In operation 963, the method may include adding the fetched memory request to the row with the pending write request. The method may further include updating the bitmap.

In operation 970, the method may include determining whether a threshold number of requests have been processed from the current queue. The threshold number may be a batch size. For example, the memory controller may determine whether a number of fetched memory requests from the current queue equals a batch size. If it is determined that the number of fetched memory requests from the current queue does not exceed the batch size, the method proceeds operation 910, where the method repeats by fetching a next memory request from the current queue. However, if it is determined that the number of fetched memory requests from the current queue equals the batch size, the method proceeds operation to operation 980.

In operation 980, the method may include determining whether the current queue is the last queue among the plurality of queues classified by the memory controller. If it is determined that the current queue is the last queue, the method proceeds operation 990. However, if it is determined that the current queue is not the last queue, the method proceeds to operation to operation 995.

In operation 990, the method may include generating a block IO generation signal and outputting the block IO generation signal to initiate block IO. Moreover, the method may include resetting next traffic class queue to restart the method to process a new batch of memory requests. In operation 995, the method may include changing the current traffic class queue to the next traffic class queue. For example, the memory controller may select the next queue, among the plurality of queues, as the current queue in a round robin manner.

Although FIG. 9 illustrates the method being performed in a particular order, the disclosure is not limited thereto, and as such, according to various other example embodiments, the operations of the method illustrated in FIG. 9 may be performed in a different order.

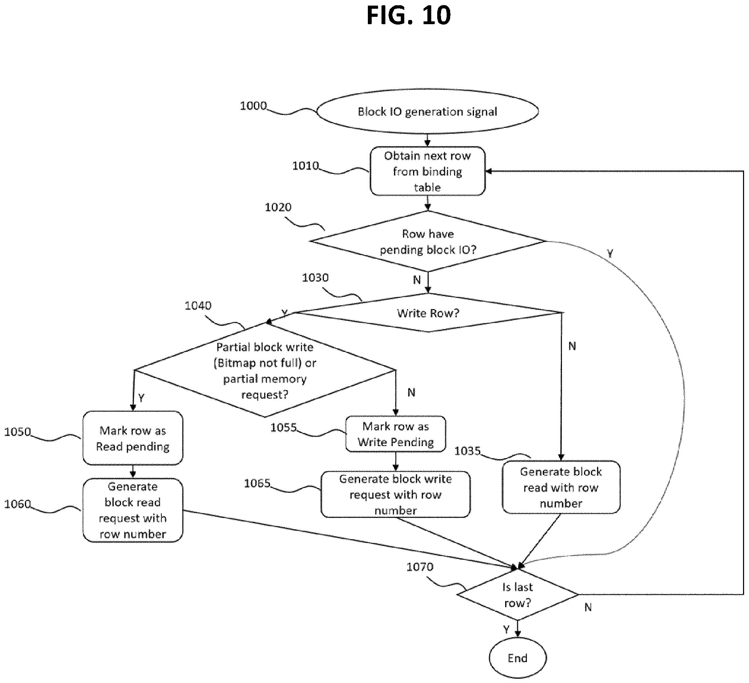

FIG. 10 illustrates a flowchart illustrating block I/O generation operations of a memory controller in a system according to an embodiment.

In operation 1000, the method may include receiving a signal for block IO generation. For example, the signal may instruct the block access module to generate the block IO.

In operation 1010, the method may include obtaining a next row from the request binding table. For example, the next row may correspond to the next row in a list of rows that have not yet been processed for block IO generation.

In operation 1020, the method may include determining whether the row has a block read pending or the row has a block write pending. If it is determined that the row has no pending block IO, the method proceeds to operation 1040. However, if the row has read pending or the row has write pending, the method proceeds to operation 1070.

In operation 1030, the method may include determining if the row is write. If the row is determined not to be a write, then in operation 1035, the method may include generating the block read command. However, if the row is determined to be a write, then the method proceeds to operation 1040.

In operation 1040, the method may include determining whether the row has a partial block write request (e.g., bitmap not full) or a partial memory request. If it is determined that the row has a partial block write request or a partial memory request, the method proceeds to operation 1050. However, if the row does not have a partial block write request or does not have a partial memory request, the method proceeds to operation 1055.

In operation 1050, the method may include marking the row as block read pending and in operation 1060, the method may include generating a block read request with a row number.

In operation 1055, the method may include marking the row as block write pending, and in operation 1065, the method may include generating a block write request with a row number.

In operation 1070, the method may include determining if the current row is the last row in the request binding table. If so, the process is completed. However, if the current row is not the last row in the request binding table, the process returns to operation 1010 and repeats the process again by obtaining the next row in the request binding table.

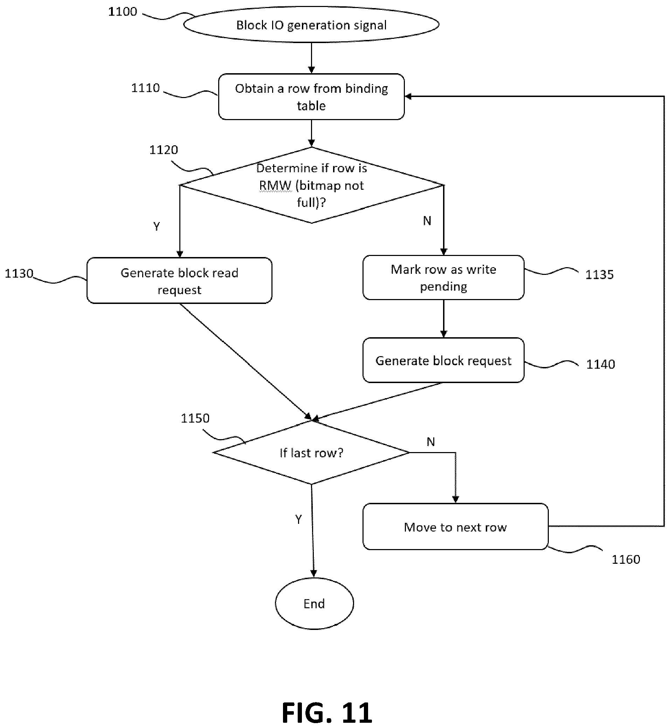

FIG. 11 illustrates a flowchart illustrating block I/O generation operations of a memory controller in a system according to an embodiment.

In operation 1100, the method may include receiving a signal for block IO generation. For example, the signal may instruct the block device driver to generate the block IO.

In operation 1110, the method may include obtaining a row from the request binding table. For example, the row may correspond to a row in a list of rows that have not yet been processed for block IO generation.

In operation 1120, the method may include determining if the row is RMW (e.g., bitmap not full). If the row is determined to be a RMW, then in operation 1130, the method may include generating the block read command. However, if the row is determined not to be a RMW, then the method proceeds to operation 1035.

In operation 1135, the method may include marking the row as a write pending, and in operation 1140, the method may include generating a block request.

In operation 1050, the method may include determining if the current row is the last row in the request binding table. If so, the process is completed. However, if the current row is not the last row in the request binding table, in operation 1160, the method may include selecting a next row in the request biding table, repeating the process again by obtaining the next row in the request binding table.

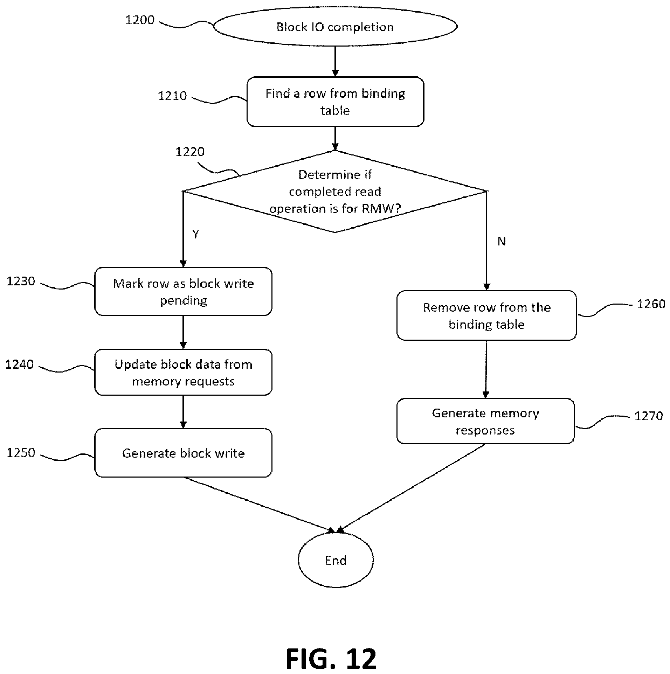

FIG. 12 illustrates a flowchart illustrating request completion operations of a memory controller in a system according to an embodiment. The operations illustrated in FIG. 12 may follow the operations illustrated in FIG. 10 or 11. However, the disclosure is not limited thereto, and as such, the order of operations may be different, one or more additional operations may be added, and/or one or more operations may be omitted.

In operation 1200, the method may include receiving a block IO completion signal. For example, the block access module may generate a block IO completion signal based on a completion of a block IO request. In operation 1210, the method may include finding a row from the request binding table.

In operation 1220, the method may include determining if a completed read operation is for a read modify write (RMW) operation, indicated as write row and block read pending. If it is determined that the completed read operation is for an RMW operation, the method proceeds to operation 1230. However, if it is determined that the completed read operation is not for an RMW operation, the method proceeds to operation 1260.

In operation 1230, the method may include marking the row from the request binding block as block write pending. In operation 1240, the method may include updating the block data received from the block device with data from the memory requests corresponding to the row from the request binding table. In operation 1250, the method may include generating a block write request based on the updated block data.

In operation 1260, the method may include removing the row from the request binding table. In operation 1270, the method may include generating memory response based on the block data received from the block device and the row from the request binding table.

Although FIG. 12 illustrates the method being performed in a particular order, the disclosure is not limited thereto, and as such, according to various other example embodiments, the operations of the method illustrated in FIG. 12 may be performed in a different order. For example, the operation 1260 of removing the row from the request binding table may be performed after the operation 1270 of generating the memory responses.

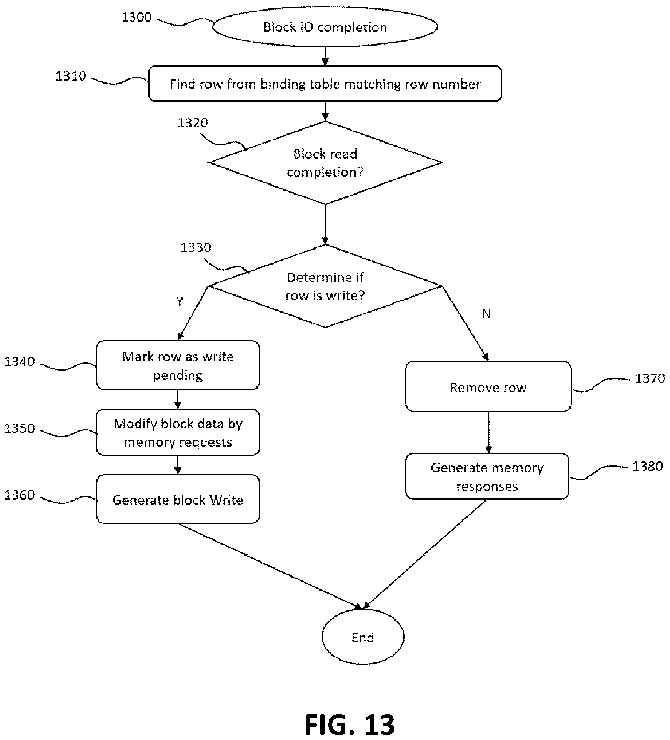

The operations illustrated in FIG. 13 may follow the operations illustrated in FIG. 10 or 11. However, the disclosure is not limited thereto, and as such, the order of operations may be different, one or more additional operations may be added, and/or one or more operations may be omitted.

In operation 1300, the method may include receiving a block IO completion signal. For example, the block device driver may generate a block IO completion signal based on a completion of a block IO request. In operation 1310, the method may include finding a row from the request binding table. For example, the method may include finding a row from the request binding table matching a row number associated with the block response from the block device (e.g., storage device).

In operation 1320, the method may include determining if a block read is completed. If it is determined that the block read is completed, the method proceeds to operation 1330. However, if it is determined that the block read is not completed, the method may wait for the completion the block read.

In operation 1330, the method may include determining if the row from the request binding table is for a write request. If it is determined that the row from the request binding table is for a write request, the method proceeds to operation 1340. However, if it is determined that the row from the request binding table is not for a write request, the method proceeds to operation 1370.

In operation 1340, the method may include marking the row from the request binding block as write pending. In operation 1350, the method may include updating the block data received from the block device with data from the memory requests corresponding to the row from the request binding table. In operation 1360, the method may include generating a block write request based on the updated block data.

In operation 1370, the method may include removing the row from the request binding table. In operation 1380, the method may include generating memory response based on the block data received from the block device and the row from the request binding table.

Although FIG. 13 illustrates the method being performed in a particular order, the disclosure is not limited thereto, and as such, according to various other embodiments, the operations of the method illustrated in FIG. 13 may be performed in a different order. For example, the operation 1370 of removing the row from the request binding table may be performed after the operation 1380 of generating the memory responses.

The disclosure provides a cost-effective memory request scheduling system without using a cache and method in an IO path of a memory request to block device in which a request binding table is used to bind memory requests to a same block together, and share a block IO. Thus, block IOs and IO amplifications may be reduced and the block device utilization may be increased.

According to one or more embodiments, the disclosure may provide the following practical benefits, including, but not limited to, small memory footprint for a better performance, simpler architecture compared to cache-oriented design, improved performance for page aligned memory access (e.g., tiered host memory system), and comparable performance for random memory access.

According to an example embodiment, the memory controller illustrated according to various example embodiments above may be implemented in a storage device applied in a data center. For example, the data center may be a facility that collects various types of pieces of data and provides services and be referred to as a data storage center. The data center may be a system for operating a search engine and a database, and may be a computing system used by companies, such as banks, or government agencies. The data center may include a plurality of application servers and storage servers. The number of application servers and the number of storage servers may be variously selected according to embodiments. The number of application servers may be different from the number of storage servers.

The memory controller illustrated according to various embodiments above may be implemented in a storage device applied in artificial intelligence (AI) systems including machine learning, large LLM models and/or deep learning. In an embodiment, the AI (Artificial Intelligence) system may include a plurality of neural network layers. Examples of neural networks include, but are not limited to, convolutional neural network (CNN), deep neural network (DNN), recurrent neural network (RNN), Restricted Boltzmann Machine (RBM). Examples of learning techniques include, but are not limited to, supervised learning, unsupervised learning, semi-supervised learning, or reinforcement learning. At least one of a plurality of CNN, DNN, RNN, RMB models and the like may be implemented to thereby achieve execution of the present subject matter's mechanism through an AI model. A function associated with AI may be performed through the non-volatile memory, the volatile memory, and the processor. The processor may include one or a plurality of processors. At this time, one or a plurality of processors may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning.

Also, the memory controller may be applied to various electronic devices including, but not limited to, a computer, a notebook computer, a mobile phone, a smart phone, a tablet, smart tablet, television, a smart television, IoT devices such as a smart refrigerator, a robot, medical devices, and autonomous vehicles.

As is traditional in the field, the embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

The various operations of methods described above may be performed by any suitable means capable of performing the operations, such as various hardware and/or software component(s), circuits, and/or module(s).

The software may include an ordered listing of executable instructions for implementing logical functions, and can be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

**Claims**

1.  A memory controller (210, 300) comprising:

    an interface (211, 301) configured to receive a memory request (C1) from a host (100, 310); and
    a processor (1100) configured to:

    fetch the memory request (C1) in a queue (31A, 31B) storing the memory request (C1),
    compare a destination address of the memory request (C1) with a first stored destination address, among one or more stored destination addresses in a storage (216),
    associate the memory request (C1) with the first stored destination address in the storage (216) based on a match between the destination address of the memory request (C1) and the first stored destination address in the storage (216), and
    process one or more entries in the storage (216) based on the memory request (C1).

2.  The memory controller (210, 300) of claim 1, further comprising a plurality of queues (Q1-Q4), each storing one or more memory requests (C1-Cn),
    wherein the processor (1100) is further configured to fetch the one or more memory requests (C1-Cn) in each of the plurality of queues (Q1-Q4) in a round robin manner.

3.  The memory controller (210, 300) of claim 1 or 2, wherein the processor (1100) is configured to add a new entry in the storage (216) corresponding to the memory request (C1) based on a determination that the destination address of the memory request (C1) is missing among the one or more stored destination addresses in the storage (216).

4.  The memory controller (210, 300) of any one of the previous claims, wherein the processor (1100) is configured to process the one or more entries in the storage (216) to generate a block input/output, IO, request for accessing a storage device (200), and
    wherein the block IO request is configured to access one or more memory requests (C 1-Cn).

5.  The memory controller (210, 300) of any one of the previous claims, wherein the one or more stored destination addresses correspond to another memory request (C2) fetched by the processor (1100).

6.  The memory controller (210, 300) of any one of the previous claims, wherein the plurality of queues (Q1-Q4) are configured to store a plurality of memory requests (C1-Cn) according to a traffic class (TC) defined based on one or more characteristics of a memory access.

7.  The memory controller (210, 300) of any one of the previous claims, wherein a first queue (Q1), among the plurality of queues (Q1-Q4), is configured to comprise first memory requests (C1-Cn) corresponding to a first traffic class (TC1),

    wherein a second queue (Q2), among the plurality of queues (Q1-Q4), is configured to comprise second memory requests (C1-Cn) corresponding to a second traffic class (TC2),
    wherein the first traffic class (TC1) and the second traffic class (TC2) are defined based on one or more characteristics of a memory access.

8.  The memory controller (210, 300) of any one of the previous claims, wherein the memory request (C1) is a compute express link, CXL, request.

9.  The memory controller (210, 300) of any one of the previous claims, wherein the destination address is a logical block address, LBA.

10. A memory controller (210, 300) comprising:

    an interface (211, 301) configured to receive a memory request (C1) from a host (100, 310); and
    a processor (1100) configured to:

    receive the memory request (C1) from the interface (211, 301),
    compare a destination address of the memory request (C 1) with one or more stored destination addresses in a storage (216),
process the memory request (C1) based on a first stored destination address, among the one or more stored destination addresses based on the destination address of the memory request (C 1) matching the first stored destination address, and
add the destination address of the memory request (C1) as a new entry in the storage (216) based on the destination address of the memory request (C1) missing the one or more stored destination addresses.

**11.** The memory controller (210, 300) of claim 10, wherein the storage (216) is a buffer.

**12.** The memory controller (210, 300) of claim 10 or 11, wherein the one or more stored destination addresses is stored in a table (407).

**13.** The memory controller (210, 300) of any one of claims 10 to 12, wherein the processor (1100) is configured to process the memory request (C1) based on the one or more stored destination addresses by associating the memory request (C1) with the first stored destination address.

**14.** The memory controller (210, 300) of any one of claims 10 to 13, wherein the memory request (C1) is a read request or a write request.

**15.** The memory controller (210, 300) of any one of claims 10 to 14, wherein the processor (1100) is configured to process the memory request (C1) based on the one or more stored destination addresses by copying data from information corresponding to the first stored destination address when the memory request (C1) is a read request to read from the first stored destination address, which is in a pending write state.

FIG. 1A

EP 4 428 699 A1

**FIG. 1B**

EP 4 428 699 A1

**FIG. 2**

EP 4 428 699 A1

# FIG. 3

EP 4 428 699 A1

**FIG. 4**

EP 4 428 699 A1

| Start LBA | Code | Valid Bitmap | Partial Mem | Mem Requests | Pending Block IO |
|-----------|------|--------------|-------------|--------------|------------------|
| X1 | Read | B1 | N | C1 ... Ck | N |
| X2 | Write | B2 | N | Ck+1...Cn | R |
| X3 | Write | B3 | Y | Cn+1...Cm | W |
| ... | ... | ... | ... | ... | ... |

# FIG. 5

| Mem Req Op | | Partial Mem Write | Bitmap | Pending Block IO |
|------------|---|-------------------|--------|------------------|
| Read / Speculative Read | ⟹ | N | 1<<OffsetInBlock | Read |
| Write | ⟹ | N | 1<<OffsetInBlock | Write, or Read/Write for RMW |
| Partial Write | ⟹ | Y | 1<<OffsetInBlock | Read/Write for RMW |

Row status In Binding Table

# FIG. 6

**FIG. 7**

# FIG. 8

EP 4 428 699 A1

# FIG. 9

910 — Fetch a memory request from a traffic class queue

920 — Obtain rows in binding table

930 — Determine if a matching row exists?

940 — Is there a pending write?

950 — Is memory request read with valid offset in bitmap

961 — Insert a new row to binding table

962 — copy data from block write

963 — Add the memory request to the table row, and update bitmap

970 — Exceeding batch size?

980 — Last queue?

990 — Output a block IO generation signal, and reset next traffic class queue

995 — Move to next Traffic class queue

EP 4 428 699 A1

FIG. 10

**FIG. 11**

1200 — Block IO completion

1210 — Find a row from binding table

1220 — Determine if completed read operation is for RMW?

Y

1230 — Mark row as block write pending

1240 — Update block data from memory requests

1250 — Generate block write

N

1260 — Remove row from the binding table

1270 — Generate memory responses

End

**FIG. 12**

1300 — **Block IO completion**

1310 — Find row from binding table matching row number

1320 — Block read completion?

1330 — Determine if row is write?

Y

1340 — Mark row as write pending

1350 — Modify block data by memory requests

1360 — Generate block Write

N

1370 — Remove row

1380 — Generate memory responses

End

**FIG. 13**

Europäisches
Patentamt

European
Patent Office

Office européen
des brevets

**EUROPEAN SEARCH REPORT**

Application Number

EP 24 16 1955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/036905 A1 (APPLE INC [US]; BISWAS SUKALPA [US] ET AL.) 22 March 2012 (2012-03-22) | 1-14 | INV. G06F13/16 G06F3/06 |
| Y | * figures 1,3,5-8 * | 15 | |
| X | US 2021/110862 A1 (MEHTA AKANKSHA [US] ET AL) 15 April 2021 (2021-04-15) | 1,3-5, 8-15 | |
| Y | * figures 1A-B,2-4 * | 2,6,7,15 | |
| Y | US 2022/197837 A1 (LAM JOHNNY A [US] ET AL) 23 June 2022 (2022-06-23) * paragraphs [0044], [0045]; figures 2-3 * | 2,6,7 | |

**TECHNICAL FIELDS SEARCHED (IPC)**

G06F

The present search report has been drawn up for all claims

| Place of search | Date of completion of the search | Examiner |
|---|---|---|
| Munich | 3 July 2024 | Havard, Corinne |

EPO FORM 1503 03.82 (P04C01)

## ANNEX TO THE EUROPEAN SEARCH REPORT
## ON EUROPEAN PATENT APPLICATION NO.

EP 24 16 1955

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2024

| Patent document cited in search report | | Publication date | Patent family member(s) | | Publication date |
|---|---|---|---|---|---|
| WO 2012036905 | A1 | 22-03-2012 | AU | 2011302452 A1 | 28-03-2013 |
| | | | BR | 112013006329 A2 | 21-06-2016 |
| | | | CN | 102402490 A | 04-04-2012 |
| | | | EP | 2431884 A1 | 21-03-2012 |
| | | | GB | 2483763 A | 21-03-2012 |
| | | | HK | 1168159 A1 | 21-12-2012 |
| | | | HK | 1168672 A1 | 04-01-2013 |
| | | | JP | 5610636 B2 | 22-10-2014 |
| | | | JP | 2012074042 A | 12-04-2012 |
| | | | KR | 20120029366 A | 26-03-2012 |
| | | | NL | 2007411 C2 | 09-05-2012 |
| | | | RU | 2013117127 A | 27-10-2014 |
| | | | TW | 201216056 A | 16-04-2012 |
| | | | WO | 2012036905 A1 | 22-03-2012 |
| US 2021110862 | A1 | 15-04-2021 | CN | 114649038 A | 21-06-2022 |
| | | | EP | 4016316 A1 | 22-06-2022 |
| | | | US | 2021110862 A1 | 15-04-2021 |
| US 2022197837 | A1 | 23-06-2022 | CN | 114647507 A | 21-06-2022 |
| | | | US | 2022197837 A1 | 23-06-2022 |
| | | | US | 2024078199 A1 | 07-03-2024 |

EPO FORM P0459

For more details about this annex : see Official Journal of the European Patent Office, No. 12/82